# FASCICULE DE BREVET EUROPEEN

(11) **EP 3 993 620 B1**
(45) Date de publication et mention de la délivrance du brevet: **06.09.2023**
(21) Numéro de dépôt: 20734962.2
(22) Date de dépôt: 01.07.2020
(51) Int. Cl.: A01K 61/54, A01K 61/55

(54) **ÉCRIN, COLONNE ET PROCÉDÉ D'ÉLEVAGE DE BIVALVES**
GEHÄUSE, SÄULE UND VERFAHREN ZUR ZÜCHTUNG VON MUSCHELN
CASE, COLUMN AND METHOD FOR BREEDING BIVALVES

(30) Priorité: 01.07.2019 FR 1907292
(43) Date de publication de la demande: 11.05.2022
(73) Titulaire: Earl Cambon & Fils, 34140 Mèze (FR)
(72) Inventeur: CAMBON, Philippe, 34140 Mèze (FR); CAMBON, Christophe, 34140 Loupian (FR)
(74) Mandataire: Rhein, Alain
(86) Numéro de dépôt international: PCT/EP2020/068535
(87) Numéro de publication internationale: WO 2021/001430

(56) Documents cités:
- FR-A1- 3 062 026
- FR-A5- 2 112 566
- US-A1- 2013 180 461

## Description

La présente invention entre dans le domaine de l'élevage de bivalves comme des huitres, des palourdes, des coquilles Saint Jacques, des moules etc.

Les techniques actuelles d'élevage de bivalves en suspension sous table et plus spécifiquement d'huitres en suspension, comprennent plusieurs étapes qui impliquent d'importantes manutentions et donc des coûts de main d'oeuvre élevés.

Il existe principalement trois techniques d'élevage de bivalves dans le domaine maritime sans ou à faible marée.

Une première technique dans laquelle les bivalves à l'état de naissain sont fixées directement sur une corde à l'aide de ciment. Les cordes parées de bivalves sont ensuite suspendues sous table durant une période variant entre 6 à 18 mois qui correspond à une étape de développement des naissains. Lorsque les bivalves atteignent leur taille adulte, les cordes sont émergées et une étape de détroquage est réalisée. L'étape de détroquage consiste à détacher les bivalves de la corde et les unes des autres. Au cours de ce processus d'élevage, les étapes de fixation des naissains et de détroquage nécessitent l'emploie d'une main d'oeuvre importante et coûteuse.

Par ailleurs, même en présence de filets, les prédateurs déciment les colonies de bivalves. La prédation combinée à des phénomènes parasitaires et/ou microbiotiques conduisent à l'obtention de faibles rendements de production qui sont bien souvent inférieurs à 50%.

Il est à noter qu'avant d'être fixés à la corde, les naissains peuvent éventuellement suivre une étape de pré-grossissement en lanterne durant une période de 6 mois. L'étape de pré-grossissement implique que le conchyliculteur fasse une fois de plus appel à une main d'oeuvre importante. Ensuite, les bivalves pré-grossis sont fixés sur une corde à l'aide de ciment.

De surcroît, le ciment utilisé pour fixer les bivalves constitue un autre problème. Généralement, le ciment est à l'eau et vient polluer les lagunes ou étendues d'eau accueillant les exploitations conchylicoles.

Deux autres techniques proposent une alternative de manière à protéger les naissains de la prédation.

Ce sont des techniques d'élevage en lanterne qui permettent d'élever le bivalve d'un naissain T15 jusqu'à l'obtention d'un bivalve de taille adulte. Toutefois, ces techniques nécessitent de réaliser des exondations régulières afin d'éliminer les algues qui s'accumulent à l'intérieur des lanternes. De plus, une exploitation conchylicole, pour être rentable, doit consentir à réaliser des investissements conséquents au travers de l'acquisition d'un grand nombre de lanternes.

De manière générale, les techniques actuelles affichent de faibles rendements de production et des coûts d'exploitation élevés dues à l'utilisation d'une main d'oeuvre importante et/ou à des investissements en matériel conséquent.

Pour répondre à ces problématiques, la demanderesse a décrit dans le document FR 3 032 860 une technique d'élevage de bivalve dans un écrin évolutif.

Cette technique utilise un écrin d'élevage de bivalves comportant un corps submersible de manière à être immergé dans l'eau. Le corps submersible est prévu pour être fixé sur une corde afin que celle-ci soit suspendue sous une table d'élevage.

Le corps submersible de l'écrin présente un logement de réception et de protection d'au moins un bivalve. Selon cette technique, le bivalve est inséré dans un logement de réception et de protection à l'état de naissain, le logement de réception et de protection comportant un pétale mobile entre une position rétractée et une position déployée. En position rétractée, le pétale protège le naissain des prédateurs en le recouvrant. En position déployée le pétale permet à un bivalve de taille adulte de filtrer aisément le plancton. Il est à noter que le pétale est prévu pour se déployer sous la poussée de croissance du bivalve.

Lorsqu'un ensemble d'écrins est fixé à une corde suspendue, cette technique permet de conserver les avantages de l'élevage vertical en suspension sur corde. En effet, un ensemble d'écrins d'élevage fixé sur corde occupe toute la hauteur de la colonne d'eau et optimise donc l'espace de filtration de chaque bivalve. Toutefois, la fixation de chaque écrin à la corde nécessite également une main d'oeuvre importante. Par ailleurs, la production industrielle de cet écrin s'avère onéreuse notamment de par la conception de pétales souples capables de se déployer sous la poussée de la croissance du bivalve.

D'autres documents techniques d'élevage décrites par les documents US 5,515,813 et FR 2 893 229 proposent des plateaux supports de bivalve compartimentés qui forment une colonne d'élevage. Les plateaux supports sont solidarisés au travers d'une canule disposée au centre du plateau qui comprend une section décroissante de manière à s'emboiter supérieurement et inférieurement avec un autre plateau support. La canule est configurée de façon à ce qu'une corde de suspension puisse s'étendre au travers afin de suspendre à une table la colonne d'élevage. Ces deux documents décrivent des techniques qui ont l'avantage de reprendre le principe de l'élevage vertical en suspension sur corde. Toutefois, leur mise en oeuvre n'est pas pratique, en particulier, elles nécessitent l'emploi d'un filet tubulaire sur toute la hauteur de la colonne afin de protéger les bivalves. De surcroît, une fois la colonne chargée en naissain, le transport jusqu'à la table d'élevage s'avère compliqué dans la mesure où une colonne d'élevage peut mesurer entre 3 et 5 mètres de haut.

A noter que le document US 2013/180461 décrit un dispositif d'élevage de bivalve similaire, tout comme on connait par le document FR 2 112 566 un casier à flotteur pour l'élevage ou le stockage de coquillages, tels que des huitres ou des moules, comprenant un flotteur central et au moins un réceptacle annulaire en forme de panier disposé sur la périphérie du flotteur et muni d'un couvercle. Ce casier est susceptible d'être accroché à un lest pour être maintenu à bonne profondeur dans l'eau.

Afin de pallier les problèmes identifiés dans l'état de la technique, la demanderesse propose par la présente une solution technique qui vise à améliorer les techniques d'élevage de bivalves.

A cet effet, un premier aspect de l'invention défini par la revendication 1 porte sur un écrin d'élevage de bivalves comportant un corps submersible qui comprend au moins un orifice par lequel une corde peut être enfilée, l'écrin d'élevage comprenant au moins un logement ménagé dans le corps submersible et adapté à recevoir et protéger au moins un bivalve, le corps submersible possède une armature qui s'étend depuis un rebord supérieur définissant la partie supérieure du corps submersible et vers une extrémité basse d'au moins une paroi latérale, l'extrémité basse de la paroi latérale définissant la partie inférieure du corps submersible, l'armature est formée par deux branches s'étendent respectivement selon deux axes B-B et C-C perpendiculaires l'un à l'autre, les deux branches sont sécantes en un point correspondant à un orifice par lequel passe un axe de suspension A-A qui est perpendiculaire au plan formé par les deux axes radiaux B-B, C-C des branches, les branches délimitant un nombre déterminé de logements, chaque logement est équipé, d'une part, d'un fond définissant la partie inférieure du corps submersible, et d'autre part, d'une paroi de protection qui s'étend depuis le fond du logement jusqu'à une bordure supérieure disposée au niveau de la partie supérieure du corps submersible.

En ce sens, l'écrin d'élevage présente l'avantage d'être un support de culture qui protège les bivalves des prédateurs et réduit les risques de transmission de germe. Tout ceci permet d'optimiser le rendement de production de bivalves.

L'écrin d'élevage se caractérise en ce qu'il comprend au moins une glissière de déplacement et des moyens d'enclenchement coulissant à translation qui communiquent en position enclenchée avec la glissière de déplacement, les moyens d'enclenchement permettent d'emboiter deux écrins d'élevage par superposition, alors que la glissière de déplacement contribue, d'une part, à rendre mobiles en translation selon l'axe de suspension A-A deux écrins d'élevage emboités, et d'autre part, à permettre un mouvement de basculement de l'écrin d'élevage supérieur par rapport à l'écrin d'élevage inférieur.

Les moyens d'enclenchement permettent d'assembler deux écrins d'élevage par superposition inférieurement et/ou supérieurement. Cette caractéristique permet de former des colonnes d'élevage de bivalves composées d'un nombre déterminé d'écrin d'élevage.

De plus, les moyens d'enclenchement coopèrent également avec au moins une glissière de déplacement, les moyens d'enclenchement de l'écrin supérieur coulissant dans la glissière de déplacement de l'écrin inférieur ou à l'inverse les moyens d'enclenchement de l'écrin inférieur coulissant dans la glissière de déplacement de l'écrin supérieur.

Par ailleurs, la glissière de déplacement permet aussi un basculement de l'écrin d'élevage supérieur par rapport à l'écrin d'élevage inférieur, lorsque deux écrins d'élevage sont emboités par superposition. Afin d'amplifier le phénomène de basculement, mais aussi d'éviter que les deux écrins ne se désenclenchent, la glissière de déplacement peut comprendre une butée à bascule disposée au niveau du rebord supérieur.

Plus précisément, selon une première caractéristique du premier aspect de l'invention, les moyens d'enclenchement possèdent :
- au moins un organe femelle disposé en partie supérieure du corps submersible, le au moins un organe femelle comportant au moins une ouverture située sur un plan passant par l'axe radial B-B, l'ouverture communiquant avec une glissière d'enclenchement parallèle de l'axe radial B-B,
- au moins un organe male disposé en partie inférieure du corps submersible, le au moins un organe mâle comprenant un segment de déport du corps submersible et une butée disposée à l'extrémité libre du segment de déport, et
- le au moins un organe male étant configuré complémentaire de le au moins un organe femelle.

De manière plus spécifique, c'est l'organe male qui est configuré pour coulisser dans l'organe femelle et atteindre la position enclenchée. De la même façon, en position enclenchée, l'organe male est configuré pour coulisser au sein de la glissière de déplacement. Cette configuration fournit, à deux écrins emboités par superposition, une mobilité l'un par rapport à l'autre.

Une seconde variante de la première caractéristique consiste à inverser la position de l'organe male et de l'organe femelle. Selon cette variante, l'organe femelle est disposé en partie inférieure alors que l'organe male est positionné en partie supérieure du corps submersible.

Selon une deuxième caractéristique du premier aspect de l'invention, l'écrin d'élevage comporte quatre logements de bivalves respectivement disposés radialement par rapport à l'axe de suspension A-A et entre deux branches de l'armature.

Selon une troisième caractéristique du premier aspect de l'invention, chaque branche présente une section transversale comportant deux parois latérales opposées l'une de l'autre et reliées respectivement à chaque extrémité d'un rebord supérieur définissant la partie supérieure du corps submersible, les deux parois latérales s'étendant de manière évasée et symétrique par rapport à un plan longitudinal médian de la branche.

Le caractère évasé des branches forme un enjambement qui participe à l'emboitement de deux écrins d'élevage par superposition l'un sur l'autre.

Selon une quatrième caractéristique du premier aspect de l'invention, la paroi de protection possédant un treillis dont la maille présente des dimensions croissantes depuis le fond du logement jusqu'à la bordure supérieure. Cette caractéristique permet de mieux protéger les bivalves à l'état de naissain que se trouvent dans le fond de chaque logement.

Selon une cinquième caractéristique du premier aspect de l'invention, l'écrin d'élevage comporte au moins deux bras qui s'étendent extérieurement au corps submersible sur l'axe radial B-B et/ou sur l'axe radial C-C, chaque bras étant relié à l'armature. Les deux bras contribuent à conserver selon le même axe deux écrins d'élevage assemblés par superposition.

Selon une sixième caractéristique du premier aspect de l'invention, le corps submersible comporte des moyens de mise en contrainte de la croissance d'au moins un bivalve de manière à le faire croitre selon une forme déterminée.

Un deuxième aspect de l'invention défini par la revendication 10 se rapporte à une colonne d'élevage de bivalves er suspension comprenant un nombre déterminé d'écrin d'élevage définis selon le premier aspect de l'invention.

La colonne d'élevage de bivalves se caractérise en ce que chaque écrin d'élevage est respectivement emboité par superposition inférieurement et/ou supérieurement, selon l'axe de suspension A-A, deux écrins d'élevage emboités sont configurés, d'une part, mobiles l'un par rapport à l'autre entre un état compact dans lequel les écrins d'élevage reposent les uns sur les autres et un état déployé dans lequel les écrins d'élevage sont maintenus à distance les uns des autres tout en restant enclenchés, et d'autre part, afin de permettre un basculement autour d'un axe radial B-B, C-C de l'écrin d'élevage supérieur par rapport à l'écrin d'élevage inférieur.

Avantageusement, la mobilité des écrins d'élevage emboités selon de suspension l'axe A-A permet de faire passer la colonne d'élevage immergée de son état déployé à son état compact. Cette possibilité est particulièrement utile lorsqu'un problème d'anoxie de fond est détecté. L'anoxie est un phénomène que l'on observe dans certaines lagunes d'eau salée. L'anoxie correspond à une baisse de la saturation en dioxygène dans l'eau de la lagune. Ce phénomène est dû à des conditions climatiques particulières : chaleur exceptionnelle, absence de vent etc. Il a été observé que cette baisse de la saturation en dioxygène se répand depuis le fond ou le bas de la colonne d'eau vers la surface. L'anoxie dite de fond tire son nom par son mode ce mode de propagation. Cependant, la partie de la colonne d'eau qui se situe en subsurface, c'est-à-dire, environ deux mètres sous la surface, est en générale épargnée par l'anoxie. L'anoxie de fond augmente le taux de mortalité des bivalves qui sont disposées sur le bas de la colonne d'eau à proximité du fond. Ces derniers décèdent par asphyxie. De fait, la colonne d'élevage à l'état compact s'étend uniquement en subsurface, les bivalves sont alors maintenues dans une zone de la colonne d'eau où la saturation en dioxygène est suffisante pour permettre leur survie.

Un troisième aspect de l'invention défini par la revendication 11 consiste en un procédé d'élevage de bivalves er suspension comprenant au moins une colonne d'élevage de bivalves selon le deuxième aspect de l'invention.

Selon l'invention, le procédé d'élevage comporte :
- une étape d'immersion d'au moins une colonne d'élevage dans un état compact, chaque logement de chaque écrin d'élevage comprenant au moins un bivalve ; et
- une étape d'élevage de bivalves, au cours de laquelle une colonne d'élevage est maintenue immergée dans un état déployé.

D'autres particularités et avantages apparaîtront dans la description détaillée qui suit, d'un exemple de réalisation, non limitatif, de l'invention illustré par les figures 1 à 10 placées en annexe et dans lesquelles :
[Fig.1] la figure 1 est une représentation vue de dessus d'un écrin d'élevage de bivalves conforme à un exemple de réalisation de l'invention ;
[Fig.2] la figure 2 est une représentation d'une vue de côté de l'écrin d'élevage de la figure 1, chaque logement de l'écrin d'élevage contenant un bivalve ;
[Fig.3] la figure 3 est une représentation en perspective des organes d'emboitement de l'écrin d'élevage de la figure 1 ;
[Fig.4] la figure 4 est une représentation latérale de l'action d'emboitement de deux écrins d'élevage l'un sur l'autre ;
[Fig.5] la figure 5 est une représentation en perspective d'un ensemble de deux écrins d'élevage conformes à l'écrin d'élevage de la figure 1, les deux écrins d'élevage étant emboités et en position de suspension ;
[Fig.6] la figure 6 est une représentation en perspective d'un ensemble de deux écrins d'élevage conformes à l'écrin d'élevage de la figure 1, les deux écrins d'élevage étant emboités et en position rétractée ;
[Fig.7] la figure 7 est une représentation latérale de la figure 6 ;
[Fig.8] la figure 8 est une représentation latérale de l'ensemble d'écrins d'élevage de la figure 7 dans une position de basculement de l'écrin d'élevage supérieur ;
[Fig.9] la figure 9 est une vue supérieure d'un écrin d'élevage selon la figure 1, l'écrin d'élevage étant équipé de moyens de mise en contrainte de la poussée d'un bivalve ; et
[Fig.10] la figure 10 est une vue supérieure d'un écrin d'élevage selon la figure 1, l'écrin d'élevage étant équipé d'une corde de suspension.

La présente invention concerne un écrin d'élevage 1 adapté à élever des bivalves tels que des huitres, des palourdes, des coquilles Saint Jacques, des moules etc. L'écrin d'élevage 1 peut être assimilé à un support d'élevage de bivalves.

L'écrin d'élevage 1 est configuré de manière à permettre une culture conchylicole suspendue sous table ou sous cordes reliées à des supports flottants qui sont utilisés pour des filières d'élevage en mer. Cette technique consiste à suspendre une corde à laquelle sont attachés des bivalves selon un nombre déterminé d'étage qui sont espacés d'une distance prédéterminée de manière à occuper toute la colonne d'eau.

A cet effet, l'écrin d'élevage 1 comporte un corps submersible 2 de manière à permettre une immersion de l'écrin d'élevage 1 dans l'eau. De préférence, dans une démarche écoresponsable, le corps submersible 2 est conçu de manière à être biologiquement neutre en milieu aquatique. De plus, toujours dans cette démarche, le corps submersible 2 peut être réalisé dans un matériau polymérique et/ou composite biosourcé et/ou recyclé.

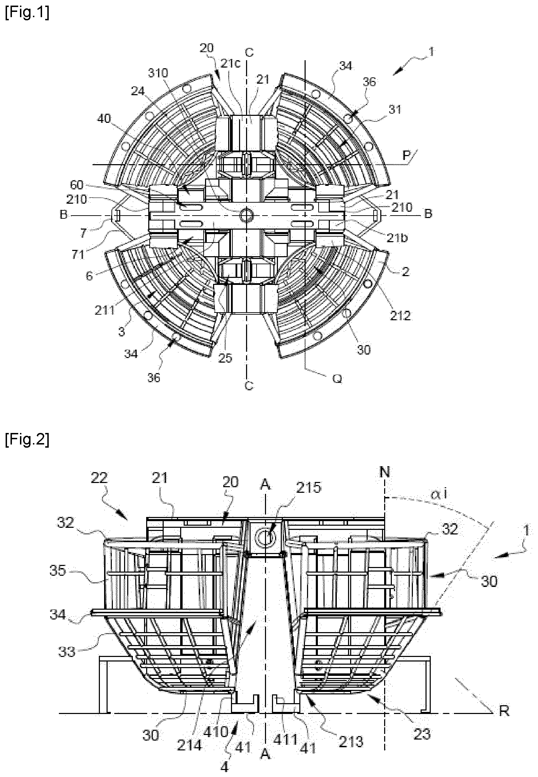

Comme illustré aux figures 1 à 10, l'écrin d'élevage 1 comprend au moins un logement 3 ménagé dans le corps submersible 2. Un logement 3 est adapté à recevoir et protéger au moins un bivalve. De préférence, un logement 3 est adapté à recevoir et protéger un seul bivalve.

Dans cet exemple, le corps submersible 2 comporte une armature 20. De préférence, l'armature 20 est ajourée afin de faciliter l'immersion et l'émersion du corps submersible 2 de l'écrin d'élevage 1.

L'armature 20 délimite un nombre déterminé de logements 3. A ces fins, l'armature 20 est formée par deux branches 21 s'étendant respectivement selon deux axes radiaux B-B et C-C perpendiculaires l'un à l'autre. Les deux branches 21 s'étendent entre deux extrémités latérales 210. Les deux branches 21 sont sécantes en un point. Ainsi, l'armature 20 comporte une section transversale en forme de croix qui est visible aux figures 1, 3, 5, 6 et 9. Cette configuration spécifique de l'armature 20 assure la rigidification du corps submersible 2.

Comme illustrée au figure 1 à 10, chaque branche 21 comprend un rebord supérieur 211 qui s'étend entre chaque extrémité latérale 210 de la branche 21. Le rebord supérieur 211 définit la partie supérieure 22 du corps submersible 2. La branche 21 comprend une paroi latérale 212 s'étendant depuis le rebord supérieur 211 et vers une extrémité basse 213. L'extrémité basse 213 de la paroi latérale 212 définit la partie inférieure 23 du corps submersible 2. De préférence, chaque paroi latérale 212 est ajourée.

Par ailleurs, le corps submersible 2 est adapté à être suspendu à un support tel qu'une table d'élevage. A cet effet, l'armature 20 comprend au moins un orifice 24 traversant qui est disposé au niveau du point d'intersection des deux branches 21. L'axe selon lequel est positionné l'orifice 24 correspond à un axe de suspension A-A de l'écrin d'élevage 1. L'axe de suspension A est perpendiculaire au plan formé par les deux axes radiaux B-B, C-C des branches 21. De surcroît, l'orifice 24 est configuré afin qu'une corde puisse être enfilée au travers de l'armature 20 du corps perméable 2.

De plus, les branches 21 délimitent un nombre déterminé de logements 3. En particulier, les branches 21 compartimentent le corps submersible 2 en quatre logements 3 distincts et espacés les uns des autres. Dans cet exemple, le corps submersible 2 comporte quatre logements de bivalves respectivement disposés radialement par rapport à l'axe de suspension A-A et entre deux branches 21 adjacentes de l'armature 20.

Dans cet exemple, l'armature 20 espace chaque logement 3 d'une distance déterminée. Espacer chaque bivalve contribue également à réduire la propagation de germes, virus et/ou bactéries, tels que la bactérie *Vibrio splendidus.*

Dans cette optique, chaque branche 21 présente une section transversale comportant deux parois latérales 212 opposées l'une de l'autre et reliées respectivement à chaque côté d'un même rebord supérieur 211.Plus spécifiquement, les deux parois latérales 212 s'étendent de manière évasée et symétrique par rapport à un plan longitudinal médian de la branche 21. De préférence, les deux parois latérales 212 présentent un écartement supérieur au niveau de l'extrémité basse 213 par rapport à l'écartement en extrémité haute au niveau du rebord supérieur 211. Ainsi, chaque branche 21 comprend une structure creuse évasée qui est ouverte inférieurement et qui définit un espace d'enjambement 214 qui contribue à permettre un emboitement par superposition avec une branche 21 d'un autre écrin d'élevage 1. L'espace d'enjambement 214 est ouvert en partie inférieure 23 de l'armature 20 et délimité, d'une part, latéralement par face interne de chaque paroi latérale 212 d'une branche 21, et d'autre part, supérieurement par le rebord supérieur 211.

A titre indicatif, un rebord supérieur 211 s'étend dans sa longueur entre deux extrémités latérales 210 sur une distance comprise entre 150 mm et 200 mm. Dans le même temps, et toujours à titre indicatif, un rebord supérieur 211 s'étend dans sa largeur entre chacun de ses côtés sur une distance comprise entre 15 mm et 25 mm. Par ailleurs, l'entraxe entre les deux extrémités basses 213 de chaque paroi latérale 212 d'une même branche 21 est compris entre 30 mm et 40 mm.

Comme illustré aux figures 1 et 2, chaque logement 3 est équipé d'un fond 30 définissant la partie inférieure 23 du corps submersible 2. Le fond 30 s'étend depuis l'extrémité basse 213 des parois latérales 212 adjacentes appartenant à deux branches 21 différentes. Par ailleurs, le logement 3 possède une paroi de protection 31 qui s'étend longitudinalement depuis le fond 30 du logement 3 jusqu'à une bordure supérieure 32. La bordure supérieure 32 est disposée au niveau de la partie supérieure 22 du corps submersible 2.

La paroi de protection 31 comprend une portion frontale et deux portions latérales qui sont solidaires de chaque branche 21 et qui contribue à délimiter latéralement le logement 3.

Dans cet exemple, la paroi de protection 31 comprend une portion inférieure 33 qui s'étend longitudinalement depuis le fond 30 du logement jusqu'à une collerette 34. De préférence, la portion inférieure 33 est inclinée par rapport à une normale N qui est parallèle à l'axe de suspension A-A. Dans cet exemple, l'angle d'inclinaison αi de la portion inférieure 33 par rapport à la normale N est compris entre 15° et 30°, et de préférence l'angle d'inclinaison αi par rapport à la normale N est de 20°.

Lors de l'installation d'un bivalve à l'état de naissain à l'intérieur d'un logement 3, la charnière du bivalve ou sa partie dorsale est positionnée contre le fond 30 du logement. Ainsi, la membrane de filtration du bivalve est orientée, par l'inclinaison de la portion inférieure 33, vers l'extérieur du logement 4. Cette caractéristique assure une meilleure filtration et oriente la croissance du bivalve selon l'orientation de la paroi de protection 31.

La collerette 34 équipe la paroi de protection 31 et s'étend transversalement entre chacune de ses bordures latérales. La paroi de protection 31 comporte également une portion supérieure 35 qui s'étend longitudinalement depuis la collerette 34 jusqu'à la bordure supérieure 32.

La paroi de protection 31 assure une protection latérale du logement 3. En effet, elle s'étend latéralement depuis deux extrémités latérales 210 adjacentes de deux branches 21 différentes. Cette protection latérale permet d'interdire latéralement l'accès du logement 3 aux prédateurs tels que les dorades. Par ailleurs, le logement 3 peut également comprendre une paroi arrière 310 qui s'étend entre deux branches 21 adjacentes à l'intérieur du corps submersible 2. De préférence, le logement 3 est délimité, d'une part, latéralement par la paroi de protection 31 et la paroi arrière 310, et d'autre part, inférieurement par le fond 30.

Par ailleurs, la paroi de protection 31 génère un logement 3 dont la profondeur peut varier entre 70 mm et 100 mm. La profondeur du logement 3 se définit par la distance entre le fond 30 du logement 3 et la bordure supérieure 32 de la paroi de protection 31. Un logement 3 de cette profondeur permet d'accueillir tant des bivalves au stade de naissain que des bivalves de calibres adultes.

Avantageusement, le fond 30 du logement 3 et la paroi de protection 31 sont formés par une structure ajourée, de type treillis. Le treillis du fond 30 du logement 3 et de la paroi de protection 31 possède une maille de dimensions déterminées.

Avantageusement, dans cet exemple, le treillis comprend une maille de dimensions croissantes depuis le fond 30 du logement 3 jusqu'à la bordure supérieure 32. A titre indicatif, la maille du treillis au niveau du fond 30 du logement peut comprendre des dimensions comprises entre 2,5 mm x 2,5 mm et 6 mm x 6 mm. A l'inverse, la maille du treillis en partie supérieure 35 peut comprendre des dimensions comprises entre 12 mm x 12 mm et 25 mm x 25 mm. Il est à noter que la maille du treillis peut être de toutes formes comme polygonale, parallélépipédique, circulaire etc.

Avantageusement, le treillis du fond 30 peut comprendre une maille plus serrée. Chaque logement peut alors accueillir des petits graviers ou du sable afin de favoriser l'élevage des bivalves fouisseurs tels que les palourdes, les clovisses, les tellines, pétoncles etc.

De préférence, la paroi arrière 310 peut comporter un treillis qui présente les mêmes propriétés que celui de la paroi de protection 31.

Les caractéristiques du logement 3, et notamment le treillis, contribuent, d'une part, à faciliter l'immersion et l'émersion du corps submersible 2 de l'écrin d'élevage 1, et d'autre part, à assurer une circulation d'eau et de phytoplancton qui garantit une bonne oxygénation du logement 3 et de bons apports en nourriture au bivalve que contient le logement 3. Le treillis permet à l'exploitant conchylicole de protéger sa production de bivalves sans utiliser de filet de protection.

Par ailleurs, le caractère incliné de la portion inférieure 33 de la paroi de protection 31 permet de réduire le volume du logement 3 en dessous de la collerette 34 ce qui contribue à optimiser l'emboitement par superposition de deux écrins d'élevage 1.

Avantageusement, superposer plusieurs écrins d'élevage 1 permet d'envisager une culture conchylicole suspendue sous table. L'objectif consiste à utiliser toute la hauteur d'eau disponible afin d'optimiser les volumes de production de bivalves. En effet, certains sites de culture de bivalves peuvent comprendre plusieurs mètres de hauteur d'eau. A titre indicatif, en France, le site de lagune de Thau peut compter entre 3 m et 9 m de hauteur d'eau. En vue d'optimiser la culture sur une telle colonne d'eau, l'écrin d'élevage 1 est configuré pour s'emboiter par superposition inférieurement et supérieurement avec d'autres écrins d'élevage 1.

De préférence, l'écrin d'élevage 1 est configuré pour que chaque fond 30 de logement 3 présente un écartement avec le fond 30 du logement 3 d'un écrin d'élevage 1 supérieur et/ou inférieur d'une distance comprise entre 40 mm à 120 mm. Ce qui permet d'obtenir 8 à 15 écrins d'élevage 1 par mètre.

Comme illustré au figures 1 à 10, l'écrin d'élevage 1 comprend des moyens d'enclenchement 4 coulissant à translation. Les moyens d'enclenchement 4 permettent d'emboiter deux écrins d'élevage 1 par superposition inférieurement ou supérieurement. Les moyens d'enclenchement 4 assurent également une cohésion réversible entre les deux écrins d'élevage 1 emboités.

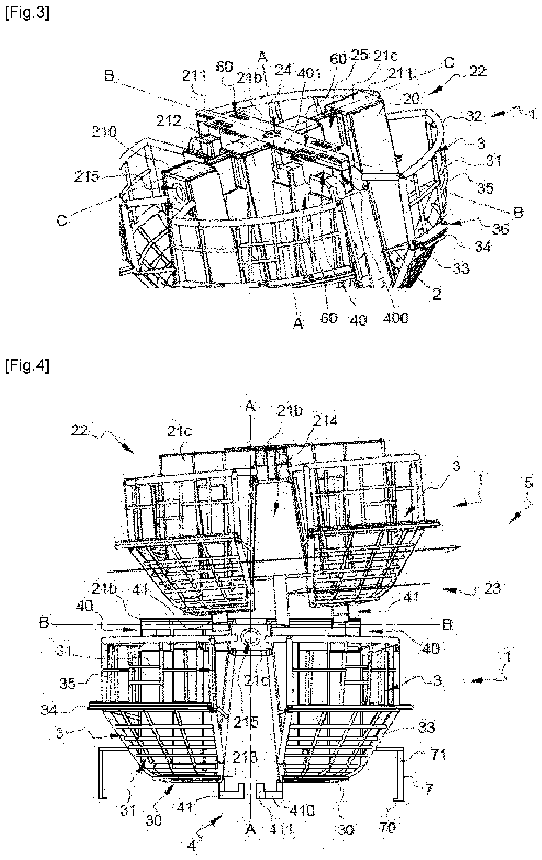

En particulier, les moyens d'enclenchement 4 comprennent au moins un organe femelle 40 et au moins un organe male 41. L'organe male 41 est complémentaire de l'organe femelle 40. Les moyens d'enclenchement 4 d'un premier écrin d'élevage 1 sont configurés pour coopérer les moyens d'enclenchement 4 d'un autre écrin d'élevage 1 superposé inférieurement et/ou supérieurement par rapport au premier écrin d'élevage 1 (illustré aux figures 4 à 8).

Comme cela est notamment illustré aux figures 2 et 3, en particulier, les moyens d'enclenchement 4 possèdent au moins un organe femelle 40 disposé en partie supérieure 22 du corps submersible 2.

Dans cet exemple, l'organe femelle 40 comporte au moins une ouverture 400 située sur un plan passant par l'axe radial B-B. L'ouverture 400 est disposée à une première extrémité latérale 210 d'une branche 21. L'ouverture 400 de l'organe femelle 40 communique avec une glissière 401 qui s'étend sous le rebord supérieur 211 selon un axe parallèle à l'axe radial B-B. Il convient de spécifier que l'organe male 41 est configuré pour coulisser dans la glissière 401 en vue de s'enclencher dans l'organe femelle 40.

Dans l'objectif de coopérer avec un organe femelle 40 d'un autre écrin d'élevage 1 en superposition, l'organe male 41 est disposé en partie inférieure 23 du corps submersible 2.

Selon un mode de réalisation non décrit de l'invention, les positions respectives de l'organe male 41 et de l'organe femelle 40 peuvent être inversées. Selon cet agencement, l'organe femelle 40 est disposé en partie inférieure 23 du corps submersible 2. Inversement, l'organe male 41 est alors disposé en partie supérieure 22 du corps submersible 2.

De préférence, l'organe mâle 41 comprend un segment de déport 410 du corps submersible 2. Le segment de déport 410 permet de déporter une butée 411 située à l'extrémité libre du segment de déport 410. Dans cet exemple, la butée 411 est formée par un crochet.

Dans l'exemple illustré aux figures 1 à 10, l'écrin d'élevage 1 comprend quatre organes femelles 40 et quatre organes males 41. Ici, les organes femelles 40 et les organes males 41 sont répartis deux à deux sur chaque branche 21 de manière symétrique par rapport aux axes radiaux B-B et C-C.

En ce sens, selon l'exemple illustré, il est possible de distinguer deux types de branche 21, une branche femelle 21b qui s'étend selon l'axe radial B-B et une branche male 21c qui s'étend selon l'axe radial C-C. Cette distinction entre les branches femelles 21b et les branches males 21c se fait par le type d'organes 40, 41 qu'elles comportent.

Selon cet exemple, une branche male 21c comporte uniquement des organes males 41 qui sont répartis deux à deux par couple de part et d'autre du point d'intersection entre les branches 21, 21b, 21c. Dans l'exemple illustré aux figures 1 et 2, un organe male 41 est disposé dans l'espace d'enjambement 214. Plus précisément, un organe male 41 est disposé dans l'espace d'enjambement 214 au niveau de l'extrémité basse 213 d'une paroi latérale 212.

Comme illustré à la figure 1, un couple d'organes males 41 est disposé sur un plan P qui est parallèle de la branche femelle 21b.

Une branche male 21c comprend deux couples d'organes males 41 qui sont disposés à une distance déterminée du point d'intersection des deux branches 21, 21b, 21c. De préférence, les deux couples d'organes males 41 sont disposés à une distance égale du point d'intersection des deux branches 21, 21b, 21c.

Selon l'exemple illustré aux figures 1 à 10, une branche femelle 21b comporte uniquement des organes femelles 40 qui sont répartis deux à deux par couple de part et d'autre du point d'intersection entre les branches 21, 21b, 21c. Dans l'exemple illustré aux figures 1 et 2, un organe femelle 41 s'étend sur la paroi latérale 212 de la branche femelle 21b.

Une branche femelle 21b comprend deux couples d'organes femelles 40 qui s'étendent deux à deux de manière symétrique par rapport à la branche male 21c. Chaque couple d'organes femelles 40 s'étend de part et d'autre la branche male 21c. Les deux organes femelles 40 qui composent un couple, s'étendent parallèlement à la branche femelle 21b.

Les moyens d'enclenchement 4 présentent une configuration spécifique qui permet d'emboiter deux écrins d'élevage 1 par superposition lorsque l'axe radial B-B d'un premier écrin d'élevage 1 se superpose avec l'axe radial C-C d'un second écrin d'élevage 1. Ceci est due au fait que les organes femelles 40 et les organes males 41 sont répartis symétriquement sur deux branches 21, 21b, 21c distinctes. Ainsi, pour assembler deux écrins d'élevage 1, il convient de faire tourner de 90° selon l'axe de suspension A-A un premier écrin d'élevage 1 par rapport à un second écrin d'élevage 1.

Selon ce mode d'assemblage, une colonne 5 d'écrins d'élevage 1 présente un assemblage d'écrins d'élevage 1 dans laquelle chaque écrin d'élevage 1 est décalé de 90° par rapport à l'écrin d'élevage 1 avec lequel il est emboité supérieurement et/ou inférieurement. Chaque écrin d'élevage 1 d'une colonne est respectivement emboité, selon l'axe de suspension A-A, inférieurement et/ou supérieurement avec au moins un autre écrin d'élevage 1.

Comme illustré dans l'exemple des figures 1 et 3, l'écrin d'élevage 1 comprend au moins une glissière de déplacement 6 qui est ménagée dans le corps submersible 2. Dans cet exemple, le corps submersible 2 comprend quatre glissières de déplacement 6. Chaque glissière de déplacement 6 communique respectivement avec la glissière d'enclenchement 401 de l'organe femelle 40 des moyens d'enclenchement 4.

Chaque glissière de déplacement 6 s'étend selon un axe parallèle à l'axe de suspension A-A. Ainsi, lorsque l'organe male 41 est enclenché dans la glissière de déplacement, il peut coulisser dans la glissière de déplacement 6 selon une direction parallèle à l'axe de suspension A-A.

Comme illustré à la figure 4, lorsque deux écrins d'élevage 1 sont enclenchés en deux temps selon un mouvement de va et vient. En ce sens, un premier couple d'organes males 41 de l'écrin d'élevage 1 supérieur est enclenché, en coulissant selon un mouvement de translation dans un premier sens, dans un premier couple d'organes femelles 40 de l'écrin d'élevage 1 inférieur. Le premier couple d'organes males 41 de l'écrin d'élevage 1 supérieur est amené en butée de la branche male 21c de l'écrin d'élevage 1 inférieur afin de permettre l'enclenchement du second couple d'organes males 41 de l'écrin d'élevage 1 supérieur dans le second couple d'organes femelles 40 de l'écrin d'élevage 1 inférieur. S'en suis un second mouvement de translation dans un second sens opposé au premier sens de translation. Le second mouvement de translation amène les deux couples d'organes males 41 de l'écrin d'élevage 1 supérieur en position enclenchée.

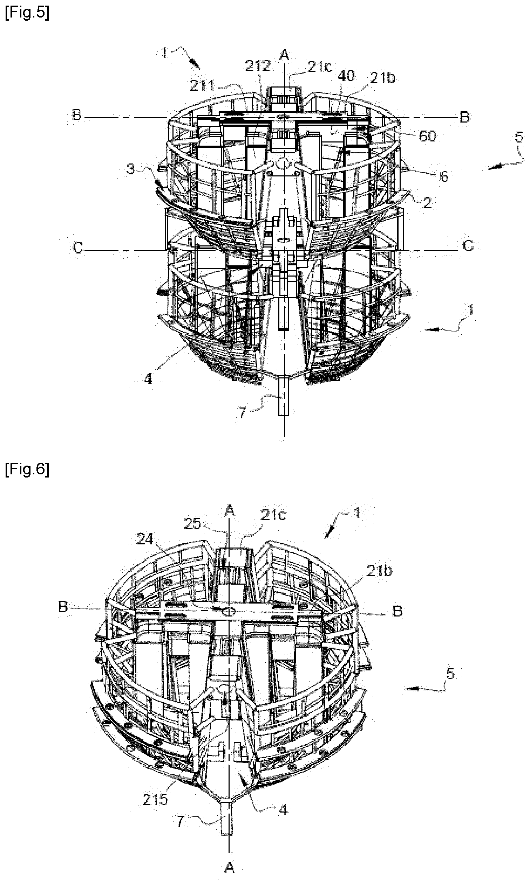

La position enclenchée est illustrée aux figures 5 et 6, dans cette position chaque organe male 41 de l'écrin d'élevage 1 supérieur est enclenché dans une glissière de déplacement 6. En position enclenchée, deux écrins d'élevage 1 sont mobiles en translation l'un par rapport l'autre selon l'axe de suspension A-A au travers de chaque glissière de déplacement 6.

Pour obtenir un tel résultat, les glissières de déplacement 6 sont disposées deux à deux sur un plan Q qui est parallèle de la branche male 21c. De préférence, les glissières de déplacement 6 et les organes males 41 sont disposés à une distance identique du point d'intersection des deux branches 21, 21b, 21c.

En position enclenchée, deux écrins d'élevage 1 sont mobiles entre deux états, un état compact et un état déployé. Dans l'état compact, chaque organe male 41 de l'écrin d'élevage supérieur se trouve à une extrémité basse d'une glissière de déplacement 6 de l'écrin d'élevage inférieur. Dans l'état compact, l'écrin d'élevage 1 supérieur repose alors sur l'écrin d'élevage 1 inférieur (illustré à la figure 6). A contrario, dans l'état déployé chaque organe male 41 de l'écrin d'élevage 1 supérieur se trouve en butée du rebord supérieur 211 d'une branche femelle 21b de l'écrin d'élevage 1 inférieur. Dans l'état déployé, les deux écrins d'élevage 1 sont maintenus à distance l'un de l'autre tout en restant enclenchés (illustré à la figure 5).

Bien entendu, cette mobilité de deux écrins d'élevage 1 enclenchés l'un avec l'autre est transposable à une colonne 5 d'écrins d'élevage 1, la colonne pouvant passer d'état compact à un état déployé sous l'effet d'un actionneur. A titre indicatif, l'actionneur peut être une corde enfilée dans l'orifice 24 de chaque écrin d'élevage 1 qui compose la colonne 5. Remonter cette corde permet de passer la colonne 5 d'un état déployé à un état compact, inversement donner du mou à la corde permet de passer de l'état compact à l'état déployé.

L'état compact peut être utile pour transporter une colonne d'écrins d'élevage 1 depuis un site terrestre où les écrins d'élevage 1 de la colonne 5 peuvent être chargés en bivalves vers une table d'élevage située dans sur une étendue d'eau. De plus, l'état compact permet de protéger des bivalves à l'état de naissain et/ou de les maintenir dans chaque logement lors de la mise à l'eau de la colonne 5 d'élevage de bivalves. Ceci est également valable pour des bivalves de calibre supérieur.

L'état déployé peut être utilisé lors de l'élevage en suspension des bivalves, en effet l'écartement entre les écrins d'élevage 1 favorise la croissance des bivalves. De plus, l'état déployé peut également être utilisé avant la culture lors du chargement en bivalves de la colonne 5 et lors du déchargement de la colonne 5 lorsque les bivalves arrivent à maturité pour être consommés.

Il est à noter que lorsque que les écrins d'élevage 1 sont assemblés en colonne 5, que ce soit à l'état déployé ou à l'état compact, un écrin d'élevage 1 de la colonne 5 contribue à restreindre l'accès aux logements 3 de l'écrin d'élevage 1 qui est emboité inférieurement. En ce sens, l'écrin d'élevage qui se trouve au sommet de la colonne 5 peut ne pas être chargé en bivalves afin d'éviter des pertes causées par des prédateurs.

Comme illustré aux figures 1 et 3, afin d'éviter toute erreur lors de l'assemblage d'une colonne 5 d'écrins d'élevage 1, le corps submersible 2 comporte au moins un détrompeur 25. Suivant l'exemple illustré, le détrompeur 25 est disposé sur branche male 21c dans le plan P commun aux deux organes males 41. De préférence, le corps submersible 2 comprend quatre détrompeurs 25. Chaque détrompeur 25 est formé par une glissière qui ne comporte pas de butée et ne permet donc pas d'enclencher deux écrins d'élevage 1 par superposition.

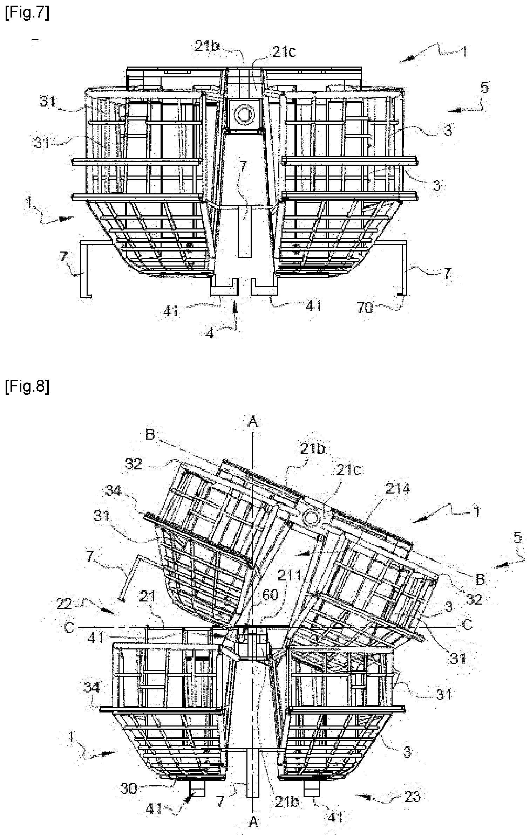

Comme illustré à la figure 8, lorsque deux écrins d'élevage 1 sont emboités l'un sur l'autre, la structure de l'armature 20 du corps submersible autorise un basculement de l'écrin d'élevage 1 supérieur par rapport à l'écrin d'élevage 1 inférieur. Ici, ce basculement s'effectue autour de l'axe radial B-B.

Le basculement est obtenu par soulèvement d'une partie de l'écrin d'élevage 1 supérieur situé d'un côté de sa branche male 21c.Deux organes males 41 de deux couples différents sont mis en butée du rebord supérieur 211 de la branche femelle 21b de l'écrin inférieur 1, alors que les deux autres organes males 41 de l'écrin d'élevage supérieur bascule au sein de la glissière de déplacement 6.

Afin d'améliorer ce phénomène de basculement, la glissière de déplacement 6 comprend une butée à bascule 60 disposée au niveau du rebord supérieur 211. La butée à bascule 60 est disposée dans le prolongement de la glissière de déplacement 6. La butée à bascule 60 est disposée sur le même axe que la glissière de déplacement 6. Dans cet exemple, la butée à bascule 60 est formée par une fente ménagée dans le rebord supérieure 211. La fente s'étend longitudinalement selon l'axe radial B-B.

Avantageusement, le crochet de l'organe male 41 s'enclenche entre la fente de la butée à bascule 60 et l'arrête du rebord supérieur 211, générant un mouvement de bascule de l'écrin d'élevage supérieur. La butée à bascule 60 autorise un basculement tout en empêchant un déboitement de l'écrin d'élevage 1 supérieur.

Le basculement permet de charger en bivalves une colonne 5 assemblée d'un nombre déterminé d'écrin d'élevage 1 avant une mise à l'eau. Inversement, le basculement permet de décharger les bivalves à maturité après une culture en milieu aquacole. Les opérations de chargement et de déchargement des écrins d'élevage 1 d'une colonne sont facilitées par ce phénomène de basculement. Par ailleurs comme deux écrins d'élevage 1 successifs sont emboités selon un décalage radial de 90°, le basculement deux écrins d'élevage successifs d'une même colonne s'effectue également selon un décalage radial de 90 °.

Comme illustré aux figures 1, 2 et 4 à 8, le corps submersible 2 comprend au moins deux bras 7 qui s'étendent extérieurement au corps submersible 2 sur l'axe radial B-B ou sur l'axe radial C-C, chaque bras 7 étant relié à l'armature 20. Dans cet exemple, chaque bras est relié à l'armature 20 au travers des parois de protection 31 des logements 3 situés de part et d'autre de l'axe radial B-B et/ou de l'axe radial C-C. Chaque bras 7 est disposé dans un même plan R que les organes males 41. Le plan R s'étend sous le corps submersible 2 de l'écrin d'élevage 1. Le plan R est parallèle au plan formé par les axes radiaux B-B et C-C.

Le corps submersible 2 peut également comprendre quatre bras 7 situés sur les deux axes radiaux B-B et C-C (illustré à la figure 7).

Dans cet exemple, un bras 7 comprend une extrémité libre 70 équipée d'un crochet et au moins un segment de déport 71 de la structure du corps submersible 2. Le crochet est orienté en direction de l'axe de suspension A-A. Le crochet présente la même orientation que les organes males 41 qui sont situés d'un même côté de l'axe radial C-C.

Les bras 7 participent à maintenir la cohésion d'une colonne 5 comprenant un nombre déterminé d'écrins d'élevage 1. En effet, les bras 7 s'étend hors de la structure et permettent de maintenir l'écrin d'élevage 1 inférieur dans l'axe de l'écrin d'élevage 1 supérieur. Ceci peut être utile dans un site aquacole sujet à une houle périodique.

De plus, les bras 7 contribuent également à prévenir le déboitement de deux écrins d'élevage successifs dans une situation de basculement (illustré à la figure 8). Cette situation peut intervenir lors du chargement des bivalves dans chaque logement 3 d'une colonne 5 d'écrins d'élevage 1. Dans cette situation hors de l'eau, la colonne 5 est suspendue afin de la remplir en bivalves, les bras 7 contribuent par leur position dans le plan R et par leur orientation à maintenir la colonne 5 droite.

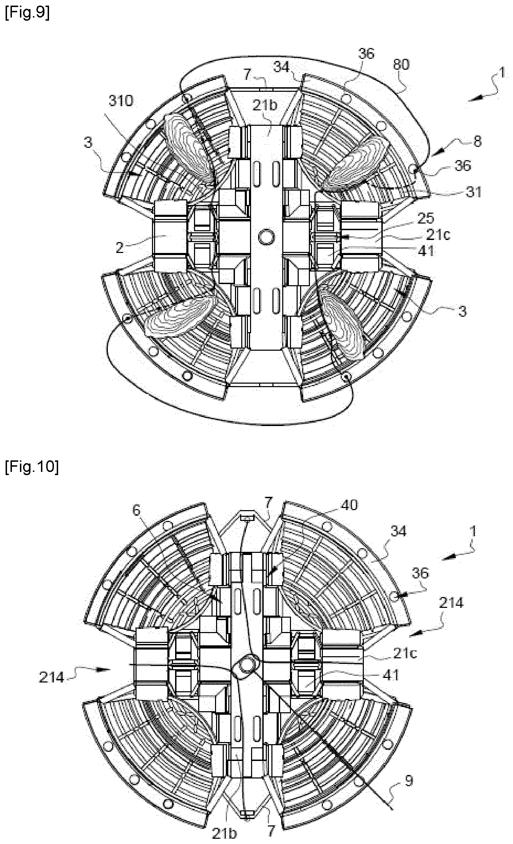

Comme illustré à la figure 9, l'écrin d'élevage 1 peut comprendre des moyens de mise en contrainte 8 de la croissance d'au moins un bivalve. Les moyens de mise en contrainte 8 permettent de faire croitre le bivalve selon une forme déterminée.

Dans cet exemple, les moyens de mise en contrainte 8 peuvent être formés par une corde 80 qui est disposée de manière à entraver la croissance du bivalve selon un axe. Ainsi une contrainte appliquée sur la partie frontale du bivalve peut conduire le bivalve 3 à former une coquille en forme de coeur. Dans cet exemple, le positionnement de la corde 80 est choisi au travers de perçage 36 qui sont ménagés sur la collerette 34 de la paroi de protection 31. De par le caractère ajouré du corps submersible 2, une corde 80 peut courir d'un logement 3 à l'autre pour mettre en contrainte les bivalves contenus respectivement dans chaque logement 3.

Il est à noter que les moyens de mise en contrainte 8 peuvent également être formés par une griffe, une tige.

Comme illustré à la figure 10, afin d'être suspendu à une table d'élevage une colonne 5 d'écrins d'élevage 1 nécessite un moyen de fixation à cette table. Comme illustré à la figure 10, l'écrin d'élevage 1 supérieur d'une colonne 5 peut être relié à une table au travers d'une corde de suspension 9 qui présente quatre points d'attache à l'écrin d'élevage 1 supérieur. Ici, la corde de suspension 9 se divise en quatre de manière à être enfilée sous chaque branche 21. L'attache en quatre points permet de maintenir en suspension la colonne 5 de façon équilibrée.

Afin de sécuriser l'attache la colonne 5 d'écrins d'élevage 1 est ainsi suspendu selon quatre points d'attache. Les points d'attache peuvent correspondre à des orifices 215 qui sont ménagé au niveau des extrémités latérales 210 d'au moins une branche 21, 21b, 21c. Chaque orifice 215 s'étend selon l'axe radiale de la branche 21 dans laquelle il est ménagée (illustré aux figures 2, 3 et 5).

Par ailleurs, comme illustré à la figure 10, la corde de suspension 9 peut également passer par deux bras 7 opposés toujours dans l'objectif de stabiliser la structure en suspension.

L'invention concerne également un procédé d'élevage de bivalves en suspension comprenant au moins une colonne 5 d'élevage de bivalves comportant un nombre déterminé d'écrins d'élevage 1.

Le procédé d'élevage comprend une étape de chargement des logements 3 de chaque écrin d'élevage 1 d'une colonne 5. Avantageusement, il est possible d'utiliser le mouvement de basculement autour l'axe radial B-B d'un écrin d'élevage 1 afin de faciliter l'accès au logement 3 pour mettre en place le bivalve. De préférence, un seul bivalve est inséré par logement 3. De manière générale, les bivalves sont insérés à l'état de naissain qu'ils soient de gros calibres (T20) ou de petits calibres (T6, T8).

Pour optimiser la culture en colonne avec par exemple entre 5 mètres et 6 mètres de profondeur sur le site d'élevage, des colonnes de cinquante écrins d'élevage 1 sont assemblées. Avantageusement, dans son état compact, une colonne 1 de cinquante écrins d'élevage présente une hauteur inférieure à 1,5 mètres. Cette faible hauteur permet de transporter facilement la colonne 5 à l'état compact depuis un site de chargement jusqu'à une table d'élevage.

Avant une mise à l'eau, une colonne 5 est placée dans son état compact en vue d'acheminer chaque colonne 5 sur le site d'élevage. Le passage de l'état déployé à l'état compact est géré au travers de la corde qui s'étend selon l'axe de suspension A-A de chaque écrin d'élevage 1.

Le procédé d'élevage comprend une étape d'immersion d'au moins une colonne 5 d'élevage dans un état compact. Au moment, de l'immersion chaque logement 3 de chaque écrin d'élevage1 comprenant au moins un bivalve. Toutefois, il est possible de ne pas charger les logements 3 de l'écrin d'élevage 1 sommital de la colonne 5.

Le procédé peut comprendre une étape de pré-culture au cours de laquelle, la colonne 5 d'élevage est maintenue immergée dans son état compact pendant une durée déterminée. Cette durée dépend essentiellement du calibre des naissains qui ont été chargé dans les logements 3. Cette étape permet de conserver et de protéger les naissains afin qu'ils absorbent de l'eau et soient maintenus au fond 30 de leur logement 3. En effet, lorsqu'ils sont chargés dans chaque logement 3, les naissains ne sont pas suffisamment chargés en eau pour rester au fond 30 de chaque logement 3 lors de l'immersion. La durée de l'étape de pré-culture peut varier d'une minute ou moins pour des naissains de gros calibre (T20) à 7 à 30 jours pour des naissains de petits calibres (T6, T8). Si l'immersion se fait en présence d'une houle importante, la durée de l'étape de pré-culture est de préférence prolongée le temps que la houle s'apaise.

Le procédé d'élevage comprend une étape de déploiement de la colonne 5 d'écrins d'élevage 1. Cette étape consiste à libérer l'extrémité supérieure de la corde qui s'étend selon l'axe de suspension A-A, les écrins d'élevage 1 passant alors, sous l'effet de la gravité d'un état compact à un état déployée.

Dans une zone aquacole de type méditerranéen et/ou tempérée, l'étape de déploiement de la colonne 5 est préférentiellement réaliser en période de croissance des bivalves. C'est-à-dire au printemps et/ou à l'automne. La période de croissance est essentiellement due à la présence de plancton dans le milieu d'élevage aquacole.

Le procédé d'élevage comprend une étape d'élevage de bivalves, au cours de laquelle une colonne 5 d'élevage est maintenue immergée dans un état déployé. L'état déployé assure une croissance optimale des bivalves 2. Dans cet exemple, l'étape d'élevage peut être comprise entre 6 à 18 mois et de préférence l'étape de développement peut être comprise entre 10 à 14 mois.

Le procédé d'élevage peut comprendre une ou plusieurs période(s) d'exondation afin de simuler les marais océaniques. La technique d'exondation est bien connue des exploitants conchylicoles, elle permet de renforcer les bivalves en générant des périodes de stress qui sont suivis de fortes poussées de croissance.

Le procédé d'élevage comprend une opération d'émersion de l'ensemble d'écrins d'élevage 1 alors que les bivalves 2 ont atteint leur taille adulte. L'émersion est réalisée par relevage de la corde 9 de suspension.

Le procédé comporte également une opération d'extraction des bivalves. Cette étape consiste à séparer les bivalves de chaque écrin d'élevage 1. Cette opération peut être réalisée directement lors de l'émersion. En général, l'émersion est réalisée à l'aide d'un tapis de levage. Avantageusement, le mouvement de basculement de chaque écrin d'élevage 1 d'une colonne 5 permet une extraction des bivalves de taille adulte lors de l'émersion.

Par ailleurs, le procédé peut également comporter des étapes de traitement des bivalves selon les critères de commercialisation en vigueur. A titre d'exemple, les bivalves peuvent être soumis à un bain de purification et de stockage avant d'être commercialisés.

## Revendications

1. Écrin d'élevage (1) de bivalves comportant un corps submersible (2) qui comprend au moins un orifice (24) par lequel une corde peut être enfilée, l'écrin d'élevage (1) comprenant au moins un logement (3) ménagé dans le corps submersible (2) et adapté à recevoir et protéger au moins un bivalve, le corps submersible (2) possède une armature (20) qui s'étend depuis un rebord supérieur (211) définissant la partie supérieure (22) du corps submersible (2) et vers une extrémité basse (213) d'au moins une paroi latérale (212), l'extrémité basse (213) de la paroi latérale (212) définissant la partie inférieure (23) du corps submersible (2), l'armature (20) est formée par deux branches (21) qui s'étendent respectivement selon deux axes radiaux (B-B, C-C) perpendiculaires l'un à l'autre, les deux branches (21) sont sécantes en un point correspondant à un orifice (24) par lequel passe un axe de suspension (A-A) qui est perpendiculaire au plan formé par les deux axes radiaux (B-B, C-C) des branches (21), les branches (21) délimitant un nombre déterminé de logements (3), chaque logement (3) est équipé, d'une part, d'un fond (30) définissant la partie inférieure (23) du corps submersible (2), et d'autre part, une paroi de protection (31) qui s'étend depuis le fond (30) du logement (3) jusqu'à une bordure supérieure (32) disposée au niveau de la partie supérieure (22) du corps submersible (2), ledit écrin étant **caractérisé en ce que**, l'écrin d'élevage (1) comprend au moins une glissière de déplacement (6) et des moyens d'enclenchement (4) coulissant à translation qui communiquent en position enclenchée avec la glissière de déplacement (6), les moyens d'enclenchement (4) permettent d'emboiter deux écrins d'élevage (1) par superposition, alors que la glissière de déplacement (6) contribue, d'une part, à rendre mobiles en translation selon l'axe de suspension (A-A) deux écrins d'élevage (1) emboités, et d'autre part, à permettre un mouvement de basculement de l'écrin d'élevage (1) supérieur par rapport à l'écrin d'élevage (1) inférieur.

2. Écrin d'élevage (1) de bivalves selon la revendication 1, **caractérisé en ce que** les moyens d'enclenchement (4) possèdent :
- au moins un organe femelle (40) disposé en partie supérieure (22) du corps submersible (2), le au moins un organe femelle (40) comportant au moins une ouverture (400) située sur un plan passant par un premier axe radial (B-B), l'ouverture (400) communiquant avec une glissière d'enclenchement (401) parallèle de cet axe radial (B-B),
- au moins un organe male (41) disposé en partie inférieure (23) du corps submersible (2), le au moins un organe mâle (41) comprenant un segment de déport (410) du corps submersible (2) et une butée (411) disposée à l'extrémité libre (412) du segment de déport (410), et
- le au moins un organe male (41) étant configuré complémentaire de le au moins un organe femelle (40).

3. Écrin d'élevage (1) de bivalves selon la revendication 1, caractérisé en ce les moyens d'enclenchement (4) possèdent :
- au moins un organe femelle (40) disposé en partie inférieure (23) du corps submersible (2), le au moins un organe femelle (40) comportant au moins une ouverture (400) située sur un plan passant par un premier axe radial (B-B), l'ouverture communiquant avec une glissière d'enclenchement parallèle de cet axe radial (B-B),
- au moins un organe male (41) disposé en partie supérieure (22) du corps submersible (2), le au moins un organe mâle (41) comprenant un segment de déport (410) du corps submersible (2) et une butée (411) disposée à l'extrémité libre (412) du segment de déport (410), et
- le au moins un organe male (41) étant configuré complémentaire de le au moins un organe femelle (40).

4. Écrin d'élevage (1) de bivalves selon l'une des revendication 1 à 3, **caractérisé en ce que** la glissière de déplacement (6) comprend une butée à bascule (60) disposée au niveau du rebord supérieur (211).

5. Écrin d'élevage (1) de bivalves selon l'une des revendications 1 à 4, **caractérisé en ce qu'**il comporte quatre logements (3) de bivalves respectivement disposés radialement par rapport à l'axe de suspension (A-A) et entre deux branches (21) de l'armature (20).

6. Écrin d'élevage (1) de bivalves selon l'une des revendications 1 à 5, **caractérisé en ce que** chaque branche (21) présente une section transversale comportant deux parois latérales (212) opposées l'une de l'autre et reliées respectivement à chaque extrémité d'un rebord supérieur (211) définissant la partie supérieure (22) du corps submersible (2), les deux parois latérales (212) s'étendant de manière évasée et symétrique par rapport à un plan longitudinal médian de la branche (21).

7. Écrin d'élevage (1) de bivalves selon l'une des revendications 1 à 6, **caractérisé en ce que** la paroi de protection (31) possédant un treillis dont la maille présente dimensions croissantes depuis le fond (30) du logement (3) jusqu'à la bordure supérieure (32).

8. Écrin d'élevage (1) de bivalves selon l'une des revendications 1 à 7, **caractérisé en ce qu'**il comporte au moins deux bras (7) qui s'étendent extérieurement au corps submersible (2) sur un premier axe radial (B-B) et/ou sur le deuxième axe radial (C-C), chaque bras (7) étant relié à l'armature (20).

9. Écrin d'élevage (1) de bivalves selon l'une des revendications 1 à 8, **caractérisé en ce que** le corps submersible (2) comporte des moyens de mise en contrainte (8) de la croissance d'au moins un bivalve de manière à le faire croitre selon une forme déterminée.

10. Colonne (5) d'élevage de bivalves en suspension comprenant un nombre déterminé d'écrins d'élevage (1) définis selon l'une des revendications 1 à 9, **caractérisé en ce que** chaque écrin d'élevage (1) est respectivement emboité par superposition inférieurement et/ou supérieurement, selon l'axe de suspension (A-A), deux écrins d'élevage (1) emboités sont configurés, d'une part, mobiles l'un par rapport à l'autre entre un état compact dans lequel les écrins d'élevage (1) reposent les uns sur les autres et un état déployé dans lequel les écrins d'élevage (1) sont maintenus à distance les uns des autres tout en restant enclenchés, et d'autre part, afin de permettre un basculement autour d'un axe radial (B-B, C-C) de l'écrin d'élevage (1) supérieur par rapport à l'écrin d'élevage (1) inférieur.

11. Procédé d'élevage de bivalves en suspension comprenant au moins une colonne (5) d'élevage de bivalves selon la revendication 10, le procédé d'élevage comportant :
- une étape d'immersion d'au moins une colonne (5) d'élevage dans un état compact, chaque logement (3) de chaque écrin d'élevage (1) comprenant au moins un bivalve ; et
- une étape d'élevage de bivalves, au cours de laquelle une colonne (5) d'élevage est maintenue immergée dans un état déployé.

## Patentansprüche

1. Aufzuchtkasten (1) für Muscheln, umfassend einen Tauchkörper (2), der mindestens eine Öffnung (24) aufweist, durch die ein Seil eingefädelt werden kann, wobei der Aufzuchtkasten (1) mindestens ein im Tauchkörper (2) angeordnetes Gehäuse (3) umfasst und geeignet ist, mindestens eine Muschel aufzunehmen und zu schützen, wobei der Tauchkörper (2) einen Rahmen (20) besitzt, der sich von einem oberen Rand (211) erstreckt, der den oberen Teil (22) des Tauchkörpers (2) und in Richtung eines unteren Endes (213) mindestens einer Seitenwand (212) definiert, wobei das untere Ende (213) der Seitenwand (212) den unteren Teil (23) des Tauchkörpers (2) definiert, wobei der Rahmen (20) aus zwei Schenkeln (21) ausgebildet ist, die sich jeweils entlang zwei radialer Achsen (B-B, C-C) senkrecht zueinander erstrecken, wobei sich die beiden Schenkel (21) an einem Punkt schneiden, der einer Öffnung (24) entspricht, durch die eine Aufhängungsachse (A-A) verläuft, die senkrecht zu der durch die beiden Radialachsen (B-B, C-C) der Schenkel (21) gebildeten Ebene ist, wobei die Schenkel (21) eine bestimmte Anzahl von Gehäusen (3) begrenzen, wobei jedes Gehäuse (3) einerseits mit einem Boden (30), der den unteren Teil (23) des Tauchkörpers (2) definiert, und andererseits mit einer Schutzwand (31) ausgestattet ist, die sich vom Boden (30) des Gehäuses (3) zu einem oberen Rand (32) erstreckt, die auf Höhe des oberen Teils (22) des Tauchkörpers (2) angeordnet ist, wobei der Kasten **dadurch gekennzeichnet ist, dass** der Aufzuchtkasten (1) mindestens eine Verschiebungsschiene (6) und beim Gleiten sich bewegende Eingriffsmittel umfasst (4), die in der Eingriffsposition mit der Verschiebungsschiene (6) kommunizieren, wobei die Eingriffsmittel (4) ermöglichen, zwei Aufzuchtkästen (1) durch Übereinanderlegen zusammenzufügen, während die Verschiebungsschiene (6) dazu beiträgt, einerseits die zwei übereinandergelegten Aufzuchtkästen (1) translatorisch entlang der Aufhängungsachse (A-A) beweglich zu machen und andererseits eine Kippbewegung des oberen Aufzuchtkastens (1) relativ zum unteren Aufzuchtkasten (1) zu ermöglichen.

2. Aufzuchtkasten (1) für Muscheln nach Anspruch 1, **dadurch gekennzeichnet, dass** die Eingriffsmittel (4) besitzen:
- mindestens ein weibliches Element (40), das im oberen Teil (22) des Tauchkörpers (2) angeordnet ist, wobei das mindestens eine weibliche Element (40) mindestens eine Öffnung (400) umfasst, die in einer Ebene liegt, die durch eine erste Radialachse (B-B) verläuft, wobei die Öffnung (400) mit einer Eingriffsschiene (401) parallel zu dieser Radialachse (B-B) kommuniziert,
- mindestens ein männliches Element (41), das im unteren Teil (23) des Tauchkörpers (2) angeordnet ist, wobei das mindestens eine männliche Element (41) ein versetztes Segment (410) des Tauchkörpers (2) und einen Anschlag (411) umfasst, der am freien Ende (412) des versetzten Segments (410) angeordnet ist, und
- das mindestens eine männliche Element (41) komplementär zu dem mindestens einen weiblichen Element (40) konfiguriert ist.

3. Aufzuchtkasten (1) für Muscheln nach Anspruch 1, **dadurch gekennzeichnet, dass** die Eingriffsmittel (4) besitzen:
- mindestens ein weibliches Element (40), das im unteren Teil (23) des Tauchkörpers (2) angeordnet ist, wobei das mindestens eine weibliche Element (40) mindestens eine Öffnung (400) umfasst, die in einer Ebene liegt, die durch eine erste Radialachse (B-B) verläuft, wobei die Öffnung mit einer Eingriffsschiene parallel zu dieser Radialachse (B-B) kommuniziert,
- mindestens ein männliches Element (41), das im oberen Teil (22) des Tauchkörpers (2) angeordnet ist, wobei das mindestens eine männliche Element (41) ein versetztes Segment (410) des Tauchkörpers (2) und einen Anschlag (411) umfasst, der am freien Ende (412) des versetzten Segments (410) angeordnet ist, und
- das mindestens eine männliche Element (41) komplementär zu dem mindestens einen weiblichen Element (40) konfiguriert ist.

4. Aufzuchtkasten (1) für Muscheln nach einem der Ansprüche 1 bis 3, **dadurch gekennzeichnet, dass** die Verschiebungsschiene (6) einen auf Höhe der Oberkante (211) angeordneten Kippanschlag (60) aufweist.

5. Aufzuchtkasten (1) für Muscheln nach einem der Ansprüche 1 bis 4, **dadurch gekennzeichnet, dass** er vier Gehäuse (3) für Muscheln umfasst, die jeweils radial relativ zur Aufhängungsachse (A-A) und zwischen zwei Schenkeln (21) des Rahmens (20) angeordnet sind.

6. Aufzuchtkasten (1) für Muscheln nach einem der Ansprüche 1 bis 5, **dadurch gekennzeichnet, dass** jeder Schenkel (21) einen quer verlaufenden Abschnitt vorweist, der zwei einander gegenüberliegende Seitenwände (212) umfasst, die jeweils an jedem Ende mit einer Oberkante (211) verbunden sind, die den oberen Teil (22) des Tauchkörpers (2) definiert, wobei die beiden Seitenwände (212) sich konisch erweiternd und symmetrisch in Bezug auf eine mittlere Längsebene des Schenkels (21) erstrecken.

7. Aufzuchtkasten (1) für Muscheln nach einem der Ansprüche 1 bis 6, **dadurch gekennzeichnet, dass** die Schutzwand (31) ein Gitter besitzt, dessen Maschenweite vom Boden (30) des Gehäuses (3) bis zum oberen Rand (32) hin zunehmende Abmessungen vorweist.

8. Aufzuchtkasten (1) für Muscheln nach einem der Ansprüche 1 bis 7, **dadurch gekennzeichnet, dass** er mindestens zwei Arme (7) umfasst, die sich außerhalb des Tauchkörpers (2) auf einer ersten Radialachse (B-B) und/oder auf der zweiten Radialachse (C-C) erstrecken, wobei jeder Arm (7) mit dem Rahmen (20) verbunden ist.

9. Aufzuchtbox (1) für Muscheln nach einem der Ansprüche 1 bis 8, **dadurch gekennzeichnet, dass** der Tauchkörper (2) Begrenzungsmittel (8) für das Wachstum mindestens einer Muschel umfasst, die sie in einer bestimmten Weise wachsen lassen.

10. Aufhängungssäule (5) zur Aufzucht von Muscheln, aufweisend eine bestimmte Anzahl von Aufzuchtkästen (1), die nach einem der Ansprüche 1 bis 9 definiert sind, **dadurch gekennzeichnet, dass** jeder Aufzuchtkasten (1) gemäß der Aufhängungsachse (A-A) jeweils durch inneres und/oder äußeres Übereinanderlegen verschachtelt ist, wobei die zwei verschachtelten Aufzuchtkästen (1) einerseits beweglich zueinander zwischen einem kompakten Zustand, in dem die Aufzuchtkästen (1) aufeinander aufliegen, und einem ausgespannten Zustand, in dem die Aufzuchtkästen (1) im Eingriff zueinander auf Abstand gehalten werden, konfiguriert sind, und andererseits, um eine Verkippung um eine Radialachse (B-B, C-C) des oberen Aufzuchtkastens (1) relativ zum unteren Aufzuchtkasten (1) zu ermöglichen.

11. Aufhängungsverfahren zur Aufzucht von Muscheln, umfassend mindestens eine Muschelaufzuchtsäule (5) nach Anspruch 10, wobei das Aufzuchtverfahren umfasst:
- einen Schritt des Eintauchens mindestens einer Aufzuchtsäule (5) in einem kompakten Zustand, wobei jedes Gehäuse (3) jedes Aufzuchtkastens (1) mindestens eine Muschel aufweist; und
- einen Schritt der Muschelaufzucht, bei dem eine Aufzuchtsäule (5) in einem ausgespannten Zustand eingetaucht gehalten wird.

## Claims

1. Bivalve breeding case (1) comprising a submersible body (2) that comprises at least one orifice (24) through which a rope can be threaded, the breeding case (1) comprising at least one housing (3) provided in the submersible body (2) and adapted to receive and protect at least one bivalve, the submersible body (2) has a framework (20) that extends from an upper rim (211) defining the upper portion (22) of the submersible body (2) and to a bottom end (213) at least one side wall (212), the bottom end (213) of the side wall (212) defining the lower portion (23) of the submersible body (2), the framework (20) is formed by two branches (21) which extend respectively along two radial axes (B-B, C-C) perpendicular to each other, the two branches (21) intersect at a point corresponding to an orifice (24) through which a suspension axis (A-A) passes that is perpendicular to the plane formed by the two radial axes (B-B, C-C) of the branches (21), the branches (21) delimiting a determined number of housings (3), each housing (3) is equipped, on the one hand, with a bottom (30) defining the lower portion (23) of the submersible body (2), and on the other hand, a protective wall (31) that extends from the bottom (30) of the housing (3) to an upper edge (32) disposed at the upper portion (22) of the submersible body (2), said case being **characterized in that,** the breeding case (1) comprises at least one movement slide (6) and locking means (4) sliding in translation that communicate in the locked position with the movement slide (6), the locking means (4) make it possible to nest two breeding cases (1) by superimposition, while the movement slide (6) contributes, on the one hand, to making two breeding cases (1) translationally movable along the suspension axis (A-A), and on the other hand, to allow a tilting movement of the upper breeding case (1) relative to the lower breeding case (1).

2. The bivalve breeding case (1) according to claim 1, **characterized in that** the locking means (4) have:
- at least one female member (40) disposed in the upper portion (22) of the submersible body (2), the at least one female member (40) comprising at least one opening (400) located in a plane passing through a first radial axis (B-B), the opening (400) communicating with a locking slide (401) parallel to that radial axis (B-B),
- at least one male member (41) disposed in the lower portion (23) of the submersible body (2), the at least one male member (41) comprising an offset segment (410) of the submersible body (2) and a stop (411) disposed at the free end (412) of the offset segment (410), and
- the at least one male member (41) being configured to complement the at least one female member (40).

3. The bivalve breeding case (1) according to claim 1, **characterized in that** the locking means (4) have:
- at least one female member (40) disposed in the lower portion (23) of the submersible body (2), the at least one female member (40) comprising at least one opening (400) located in a plane passing through the first radial axis (B-B), the opening communicating with a locking slide parallel to the radial axis (B-B),
- at least one male member (41) disposed in the upper portion (22) of the submersible body (2), the at least one male member (41) comprising an offset segment (410) of the submersible body (2) and a stop (411) disposed at the free end (412) of the offset segment (410), and
- the at least one male member (41) being configured to complement the at least one female member (40).

4. The bivalve breeding case (1) according to one of claims 1 to 3, **characterized in that** the movement slide (6) comprises a toggle stop (60) disposed at the upper rim (211).

5. The bivalve breeding case (1) according to one of claims 1 to 4, **characterized in that** it comprises four bivalve housings (3) respectively disposed radially with respect to the suspension axis (A-A) and between two branches (21) of the framework (20).

6. The bivalve breeding case (1) according to one of claims 1 to 5, **characterized in that** each branch (21) has a cross-section comprising two side walls (212) that are opposite one another and respectively connected to each end of an upper rim (211) defining the upper portion (22) of the submersible body (2), the two side walls (212) extending in a flared and symmetrical manner with respect to a median longitudinal plane of the branch (21).

7. The bivalve breeding case (1) according to one of claims 1 to 6, **characterized in that** the protective wall (31) having a netting, the mesh of which has increasing dimensions from the bottom (30) of the housing (3) to the upper edge (32).

8. The bivalve breeding case (1) according to one of claims 1 to 7, **characterized in that** it comprises at least two arms (7) that extend outside the submersible body (2) on a first radial axis (B-B) and/or on the second radial axis (C-C), each arm (7) being connected to the framework (20).

9. The bivalve breeding case (1) according to one of claims 1 to 8, **characterized in that** the submersible body (2) comprises means (8) for constraining the growth of at least one bivalve so as to cause it to grow in a determined shape.

10. The column (5) for suspended bivalve breeding comprising a determined number of breeding cases (1) defined according to one of claims 1 to 9, **characterized in that** each breeding case (1) is respectively nested by superposition below and/or above along the suspension axis (A-A), two nested breeding cases (1) are configured, on the one hand, to be movable with respect to one another between a compact state in which the breeding cases (1) rest on one another and an extended state in which the breeding cases (1) are kept at a distance from one another while locked, and on the other hand, to allow tilting about a radial axis (B-B, C-C) of the upper breeding case (1) relative to the lower breeding case (1).

11. A method for suspended bivalve breeding comprising at least one bivalve breeding column (5) according to claim 10, the breeding method comprising:
- a step of submerging at least one breeding column (5) in a compact state, each housing (3) of each breeding case (1) comprising at least one bivalve; and
- a bivalve breeding step, during which a breeding column (5) is kept submerged in a deployed state.
